# EUROPEAN PATENT APPLICATION

(11) **EP 4 592 130 A1**
(43) Date of publication of application: **30.07.2025**
(21) Application number: 24221489.8
(22) Date of filing: 19.12.2024
(51) Int. Cl.: B60L 50/64, B60L 53/80, H01R 13/631, H01R 13/642

(54) **PLUG, ELECTRICAL CONNECTOR, BATTERY PACK AND ELECTRIC DEVICE**

(30) Priority: 29.01.2024 CN 202420212874 U
(71) Applicant: Nio Technology (Anhui) Co., Ltd, Hefei City, Anhui 230601 (CN)
(72) Inventor: ZHANG, Julin, Jiading Shanghai (CN); YAN, Chunxiao, Jiading Shanghai (CN); ZHAO, Yefei, Jiading Shanghai (CN); WANG, Chen, Jiading Shanghai (CN); LV, Wenting, Jiading Shanghai (CN); YAO, Tingting, Jiading Shanghai (CN)
(74) Representative: Vossius & Partner Patentanwälte Rechtsanwälte mbB

(57) **Abstract**

A plug, an electrical connector, a battery pack and an electric device, the plug being configured for plugging into a socket, the socket including a first guide hole and a second guide hole, the plug including a first guide column to be inserted into the first guide hole and a second guide column to be inserted into the second guide hole, the first guide column and the second guide column being arranged in a first direction, and the first guide column having a smaller size in the first direction than the second guide column in the first direction. When the plug and the socket are plugged, the first guide column has a gap from the first guide hole in the first direction due to the smaller size in the first direction, allowing the plug to move to a certain extent so as to be successfully plugged and unplugged.

## Description

### Technical Field

The disclosure relates to the field of connectors, and particularly provides a plug, an electrical connector, a battery pack and an electric device.

### Background Art

An electrical connector is a connecting bridge, is a basic component necessary for a complete system, and plays a very important role in electrical equipment. With the expansion of the application field of electrical equipment, the application environment of the electrical connector has also been expanded, for example, to a new energy vehicle.

The electrical connector is divided into a plug and a socket, which are plugged to complete an electrical connection. The electrical connector for a new energy vehicle is divided into a battery end (plug), a vehicle end (socket) and a station end, where the station end is an interface for charging a battery pack in a battery swap station.

In order to achieve the alignment of the plug and the socket for the electrical connection, guide columns are usually provided on the plug, guide holes are formed on the socket, and terminals of the plug and terminal holes of the socket are plugged through the insertion of the guide columns and the guide holes. However, due to deviations in a preparation process, the distance between the guide columns of the plug is inconsistent with that between the guide holes of the socket, leading to the problem of high insertion resistance or inability to insert.

### Summary

In order to solve the problem of high insertion resistance or inability to insert, the disclosure provides a plug for plugging into a socket, the socket including a first guide hole and a second guide hole, the plug including a first guide column to be inserted into the first guide hole and a second guide column to be inserted into the second guide hole, the first guide column and the second guide column being arranged in a first direction, and the first guide column having a smaller size in the first direction than the second guide column in the first direction. When the plug and the socket are plugged, the first guide column has a gap from the first guide hole in the first direction due to the smaller size in the first direction, allowing the plug to move to a certain extent so as to be successfully plugged and unplugged.

In an optional technical solution of the disclosure, the first guide column includes a first guide section and a first positioning section, and the second guide column includes a second guide section and a second positioning section, the first guide section and the second guide section each including a conical section, the second positioning section including a cylindrical section, and the first positioning section including a first face intersecting with the first direction and a second face connected to the first face. The conical section can form a guide face with the guide hole to facilitate the insertion of the first guide column/second guide column into the first guide hole/second guide hole. The second positioning section is a cylindrical section which can form a limiting structure with a hole wall of the second guide hole. There is a gap between the first face of the first positioning section intersecting with the first direction and a hole wall of the first guide hole, so that the first positioning section can be allowed to move in the first direction within a certain range, i.e., the plug can move within a certain range in the first direction so as to achieve a smooth insertion of the second guide column and the second guide hole, thus solving the problem of inconsistency of the distance between the guide columns of the plug and between the guide holes of the socket during a preparation process.

In an optional technical solution of the disclosure, the first face includes a flat surface, and the second face includes an arcuate face.

In an optional technical solution of the disclosure, the first positioning section includes two flat surfaces, the arcuate faces being connected between the two flat surfaces. There is a gap between each of the two flat surfaces of the first positioning section and the hole wall of the first guide hole, so the first guide column moves in the first direction within the first guide hole to a greater extent, facilitating the plugging and unplugging of the plug and the socket.

In an optional technical solution of the disclosure, the first face includes an arcuate face, and the second face includes an arcuate face.

In an optional technical solution of the disclosure, the cross section of the first positioning section in a horizontal direction is rhombic, and a gap is present between each of two corners of the first positioning section arranged in the first direction and the hole wall of the first guide hole to allow the first guide column to move, and the first positioning section is in contact with the hole wall of the first guide hole only through a rhombic corner, that is, the contact area is reduced, so that the insertion resistance between the first positioning section and the first guide hole is also reduced.

In an optional technical solution of the disclosure, the first guide column further includes a first support section connected to the first positioning section, the first support section having a smaller radial size than that of the first positioning section; and

the second guide column further includes a second support section connected to the second positioning section, the second support section having a smaller radial size than that of the second positioning section. The contact area of the first guide column with the hole wall of the first guide hole is reduced, and the contact area of the second guide column and the hole wall of the second guide hole is reduced, thus reducing the insertion resistance.

In an optional technical solution of the disclosure, a length L1 of the first positioning section and a length L2 of the second positioning section satisfy: 5 mm ≤ L1 ≤ 15 mm, 5 mm ≤ L2≤ 15 mm.

The disclosure further provides an electrical connector, including a socket and the plug.

The disclosure further provides a battery pack, including the plug.

The disclosure further provides an electric device, including the plug.

### Brief Description of the Drawings

FIG. 1 is a cross-sectional view showing a state in which a plug and a socket are plugged;
FIG. 2 is a perspective view of a plug;
FIG. 3 is an enlarged cross-sectional view showing a state in which a first guide column is inserted into a first guide hole; and
FIG. 4 is a horizontal cross-sectional view of a first positioning section within a first guide hole.

### List of reference signs:

First guide column 1, First guide section 1.1, First positioning section 1.2, First face 1.21, Second face 1.22, First support section 1.3;
Second guide column 2, Second guide section 2.1, Second positioning section 2.2, Second support section 2.3;
First guide hole 3, First guide face 3.1, First hole wall 3.2;
Second guide hole 4, Second guide face 4.1, Second hole wall 4.2;
Gap 5.

### Detailed Description of Embodiments

The optional implementations of the disclosure are described below with reference to the accompanying drawings. It should be understood by those skilled in the art that these implementations are only for explaining the technical principles of the disclosure and are not intended to limit the scope of protection of the disclosure.

It should be understood that, in the description of the disclosure, the terms that indicate the orientation or positional relationship, such as "distance", "width", "thickness", "upper", "lower", "left", "right", "inner" and "outer", are based on the orientation or positional relationship shown in the figures, which is merely intended to facilitate and simplify the description of the disclosure rather than indicating or implying that the device or element must have a particular orientation and be constructed and operated in a particular orientation, and therefore should not be construed as limiting the disclosure.

In the description of the disclosure, the terms "first", "second", "third" and "fourth" are used for descriptive purposes only, and cannot be construed as indicating or implying relative importance or implicitly indicating the number of technical features indicated. In the description of the disclosure, the phrase "a plurality of" means at least two, such as two, three, etc., unless otherwise specifically defined.

In addition, it should also be noted that, in the description of the disclosure, the terms "dispose" and "connect" should be interpreted in a broad sense unless explicitly defined and limited otherwise. For example, a connection may be a fixed connection, a detachable connection, or an integral connection; and may be a direct connection, an indirect connection by means of an intermediary, or internal communication between two elements. For those skilled in the art, the specific meaning of the above-mentioned terms in the disclosure can be interpreted according to the specific situation.

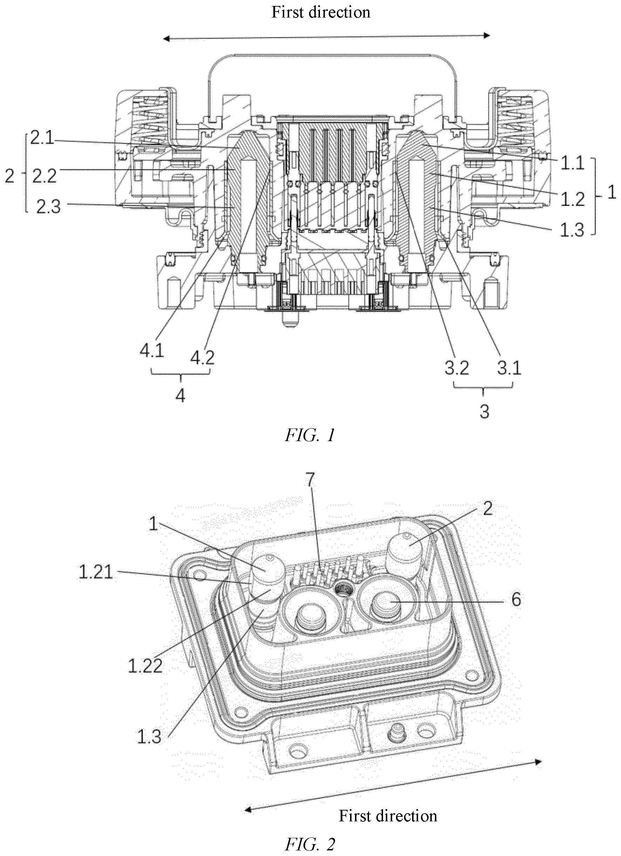

As shown in FIGS. 1 and 2, the disclosure provides a plug for plugging into a socket. A first guide column 1 and a second guide column 2 are provided on the plug, and the corresponding socket includes a first guide hole 3 and a second guide hole 4, the first guide column 1 being configured to be inserted into the first guide hole 3, and the second guide column 2 being configured to be inserted into the second guide hole 4. The first guide column 1 and the second guide column 2 are arranged in a first direction, the first guide column 1 having smaller size in the first direction than the second guide column 2 in the first direction. When the plug and the socket are plugged, since the first guide column 1 has a small size in the first direction, there is a gap between the first guide column 1 and the first guide hole in the first direction, allowing the plug to move to a certain extent so as to be successfully plugged and unplugged.

In an optional embodiment of the disclosure, as shown in FIGS. 1-4, the first guide column 1 and the second guide column 2 are similar in overall structure, the first guide column 1 including a first guide section 1.1 and a first positioning section 1.2, and the second guide column 2 including a second guide section 2.1 and a second positioning section 2.2. The first guide section 1.1 and the second guide section 2.1 each include a conical section, the conical section of the first guide section 1.1 cooperates with a first guide face 3.1 of the first guide hole 3 that has a conical surface to achieve guiding, and the conical section of the second guide section 2.1 cooperates with a second guide face 4.1 of the second guide hole 4 that has a conical surface to achieve guiding. The second positioning section 2.2 is a cylindrical section which can form a limiting structure with a second hole wall 4.2 of the second guide hole 4. The first positioning section 1.2 includes a first face 1.21 intersecting with the first direction and a second face 1.22 connected to the first face 1.21. There is a gap 5 between the first face 1.21 and a first hole wall 3.2 of the first guide hole 3. The gap 5 allows the first positioning section 1.2 to move in the first direction within a certain range, thereby ameliorating the problem of deviations in the distance between the two guide columns and the distance between the two guide holes during the preparation process, so that the second guide column 2 can be smoothly plugged into or unplugged from the second guide hole 4.

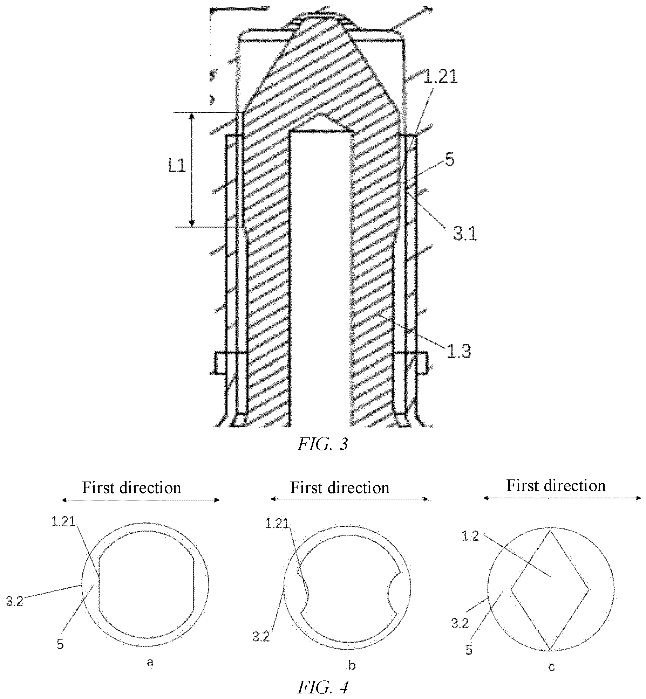

In an optional embodiment of the disclosure, as shown in FIGS. 2 and 4, the first face 1.21 may be a flat surface, and the second face 1.22 may be an arcuate face. In the disclosure, the first positioning section 1.2 includes two spaced flat surfaces in the first direction, the arcuate faces being connected between the two flat surfaces. There is a gap 5 between each flat surface and the first hole wall 3.2, and the first guide column 1 moves in the first direction within the first guide hole 3 to a greater extent, facilitating the plugging and unplugging of the plug and the socket. The first positioning section 1.2 in this embodiment is provided with two spaced first faces 1.21, and of course only one first face may be provided. The first face 1.21 in this embodiment is a flat surface, the first face 1.21 may be arranged as an arcuate face, or the first face 1.21 may be formed by a combination of a flat surface and an arcuate face.

In an optional embodiment of the disclosure, as shown in FIG. 4(c), the cross section of the first positioning section 1.2 in a horizontal direction is rhombic, and a gap 5 is present between each of two corners of the first positioning section 1.2 arranged in the first direction and the first hole wall 3.2, thus allowing the first guide column 1 to move in the first direction. The first positioning section 1.2 and the first hole wall 3.2 are in contact only through a rhombic corner, thus reducing the contact area, so that the insertion resistance between the first guide column 1 and the first guide hole 3 is also reduced. In another optional embodiment of the disclosure, setting the cross section of the first positioning section 1.2 in the horizontal direction to a circle with a smaller diameter than the second positioning section 2.2 also allows the first guide column 1 to move within the first guide hole 3 in the first direction.

In an optional embodiment of the disclosure, as shown in FIGS. 1-3, the first guide column 1 further includes a first support section 1.3 connected to the first positioning section 1.2, the first support section 1.3 having a smaller radial size than that of the first positioning section 1.2; and the second guide column 2 further includes a second support section 2.3 connected to the second positioning section 2.2, the second support section 2.3 having a smaller radial size than that of the second positioning section 2.2. The first support section 1.3 and the second support section 2.3 serve only a supporting function and do not contact the hole wall of the first guide hole 3 or the second guide hole 4, so that the contact area of the first guide column 1 with the hole wall of the first guide hole 3 is reduced, and the contact area of the second guide column 2 and the hole wall of the second guide hole 4 is reduced, thus reducing the insertion resistance. Specifically, the length L1 of the first positioning section 1.2 satisfies: 5 mm ≤ L1 ≤ 15 mm. The length L2 (not shown) of the second positioning section 2.2 satisfies: 5 mm ≤ L2 ≤ 15 mm. The length L1 of the first positioning section 1.2 and the length L2 of the second positioning section 2.2 can be the same or different, and specifically, L1 and L2 each can be 5 mm, 7 mm, 9 mm, 11 mm, 13 mm or 15 mm.

As shown in FIG. 2, the plug also includes a high-voltage terminal 6 and a low-voltage terminal 7, and the corresponding socket is provided with a high-voltage receptacle and a low-voltage receptacle, the first guide column 1 and the second guide column 2 being vertically higher than the high-voltage terminal 6 and the low-voltage terminal 7. When the plug and the socket are plugged, the first guide column 1 and the second guide column 2 are connected to the first guide hole 3 and the second guide hole 4 for guiding, then the high-voltage terminal 6 is electrically connected to the high-voltage receptacle, and the low-voltage terminal 7 is electrically connected to the low-voltage receptacle.

The disclosure further provides an electrical connector, including a socket and the plug.

The disclosure further provides a battery pack, including the plug.

The disclosure further provides an electric device, including the plug. The plug may be provided on either of the battery pack and the electric device, and the socket on the other. The electric device may be an electric vehicle, etc.

Heretofore, the technical solutions of the disclosure have been described in conjunction with the optional implementations shown in the drawings, however, those skilled in the art can readily understand that the scope of protection of the disclosure is clearly not limited to these specific implementations. Those skilled in the art could make equivalent changes or substitutions to the related technical features without departing from the principles of the disclosure, and all the technical solutions after the changes or the substitutions fall within the scope of protection of the disclosure.

## Claims

1. A plug for plugging into a socket, in which the socket comprises a first guide hole and a second guide hole, the plug comprises a first guide column and a second guide column, the first guide column is configured to be inserted into the first guide hole, and the second guide column is configured to be inserted into the second guide hole, the first guide column and the second guide column being arranged in a first direction, and the first guide column having a smaller size in the first direction than the second guide column in the first direction.

2. The plug of claim 1, wherein the first guide column comprises a first guide section and a first positioning section, and the second guide column comprises a second guide section and a second positioning section, the first guide section and the second guide section each comprising a conical section, the second positioning section comprising a cylindrical section, and the first positioning section comprising a first face intersecting with the first direction and a second face connected to the first face.

3. The plug of claim 2, wherein the first face comprises a flat surface and the second face comprises an arcuate face.

4. The plug of claim 2 or 3, wherein the first positioning section comprises two flat surfaces, the arcuate faces being connected between the two flat surfaces.

5. The plug of claim 2, wherein the first face comprises an arcuate face and the second face comprises an arcuate face.

6. The plug of any of claims 2 to 5, wherein the cross section of the first positioning section in a horizontal direction is rhombic.

7. The plug of any of claims 2 to 6, wherein
the first guide column further comprises a first support section connected to the first positioning section, the first support section having a smaller radial size than that of the first positioning section; and
the second guide column further comprises a second support section connected to the second positioning section, the second support section having a smaller radial size than that of the second positioning section.

8. The plug of any of claims 2 to 7, wherein in a vertical direction, a length L1 of the first positioning section satisfies: 5 mm ≤ L1 ≤ 15 mm.

9. The plug of any of claims 2 to 8, wherein in a vertical direction, a length L2 of the second positioning section satisfies: 5 mm ≤ L2≤ 15 mm.

10. An electrical connector, comprising a plug according to any one of claims 1 to 9 and a socket.

11. A battery pack, comprising a plug according to any one of claims 1 to 9.

12. An electric device, comprising a plug according to any one of claims 1 to 9.
